(19) Europäisches Patentamt
European Patent Office
Office européen des brevets

(11) EP 4 257 320 A2

(12) EUROPÄISCHE PATENTANMELDUNG

(43) Veröffentlichungstag:
11.10.2023 Patentblatt 2023/41

(51) Internationale Patentklassifikation (IPC):
B29B 9/06 (2006.01)

(21) Anmeldenummer: 23165533.3

(52) Gemeinsame Patentklassifikation (CPC):
B29B 9/065

(22) Anmeldetag: 30.03.2023

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(30) Priorität: 05.04.2022 DE 102022108106

(71) Anmelder: Lean Plastics Technologies GmbH
98693 Ilmenau (DE)

(72) Erfinder:
• DÜNGEN, Matthias
99094 Erfurt (DE)
• LANGLOTZ, Martin
98693 Eisenach (DE)

(74) Vertreter: Liedtke & Partner Patentanwälte
Gerhart-Hauptmann-Straße 10/11
99096 Erfurt (DE)

(54) **MESSERKOPF FÜR EINE VORRICHTUNG ZUR UNTERWASSERGRANULIERUNG**

(57) Messerkopf (1), insbesondere für eine Vorrichtung zur Unterwassergranulierung, wobei der Messerkopf (1) einen Grundkörper (2), der zur Montage an einer Antriebswelle (15) konfiguriert ist, aufweist, sowie eine erste Stirnseite (7) und eine Vielzahl von Messern (8), die auf der ersten Stirnseite (7) in einem Kreis aufeinanderfolgend angeordnet sind, wobei zwischen einander benachbarten Messern (8) jeweils ein Zwischenraum (9) vorgesehen ist und wobei die Messer (8) als frei geformte Messer (8) ausgebildet sind, die ausgehend von der Stirnseite (7) in sich spiralartig gewunden sind. Des weiteren wird eine Anordnung umfassend einen solchen Messerkopf offenbart sowie eine darauf bezogene Vorrichtung zur Unterwassergranulierung.

FIG 1

EP 4 257 320 A2

**Beschreibung**

Die Erfindung betrifft einen Messerkopf für eine Vorrichtung zur Unterwassergranulierung gemäß Anspruch 1.

Thermoplastische Kunststoffe werden typischerweise zunächst zu einer Granulatform verarbeitet, bevor sie formgebenden Verfahren wie Spritzguss, Extrusion usw. zugeführt werden.

Bei der Unterwassergranulierung werden rotierende Messer genutzt, um die Kunststoffstränge zu schneiden. Die Messer sind in einem als Messerkopf oder Messerhalter bezeichneten Bauteil befestigt, das über eine Welle angetrieben wird. Die Messer sind typischerweise als Verschleißteile ausgeführt. Daher ist die übliche Ausführung des Messerkopfes eine, bei der die Messer auswechselbar sind und über eine Schraub- oder Klemmverbindung befestigt werden. Es sind auch Ausführungen bekannt, bei dem der Messerkopf samt Messern aus einem Teil gefertigt ist. In diesem Fall ist der komplette Messerkopf ein Verschleißteil. Somit entfällt der Montageaufwand für jedes einzelne Messer und mögliche Ungenauigkeiten der Montage können vermieden werden.

Die einzelnen Messer des Messerkopfes sind im Stand der Technik gerade oder annähernd quaderförmig mit einer angeschliffenen Schneidkante. Diese Messerform ist günstig für die Herstellung der Messer und auch für den verschleißbedingten Austausch der Messer ist diese Form gut handhabbar. Problematisch ist jedoch, dass gerade Messer durch ihre Abnutzung im Prozess ihre Position beim Schneiden des Schneidgutes verändern. Dadurch verändert sich mit fortschreitender Abnutzung die Schneidsituation, so dass die hergestellte Form der abgeschnittenen Stränge ("Körner") variiert.

Meist erfolgt die Befestigung der geraden Messer über seitliche Klemmbacken und die Befestigung der Klingen (geklemmt oder geschraubt) benötigt Raum.

Der Erfindung liegt die Aufgabe zu Grunde, einen neuartigen Messerkopf anzugeben.

Die Aufgabe wird erfindungsgemäß gelöst durch einen Messerkopf mit den Merkmalen des Anspruchs 1.

Vorteilhafte Ausgestaltungen der Erfindung sind Gegenstand der Unteransprüche.

Ein erfindungsgemäßer Messerkopf umfasst:

- einen Grundkörper, der zur Montage an einer Antriebswelle konfiguriert ist, und eine erste Stirnseite aufweist,
- eine Vielzahl von Messern, die auf der ersten Stirnseite in einem Kreis aufeinanderfolgend angeordnet sind, wobei zwischen einander benachbarten Messern jeweils ein Zwischenraum vorgesehen ist, wobei die Messer jeweils als frei geformte Messer ausgebildet sind, die ausgehend von der Stirnseite in sich spiralartig gewunden sind.

In einer Ausführungsform weist der Grundkörper einen inneren Ring und einen äußeren Ring auf, die über eine Anzahl von stegartigen Speichen miteinander verbunden sind, so dass sich in Umfangsrichtung zwischen den Speichen Aussparungen ergeben, oder wobei keine Aussparungen zwischen dem inneren Ring und dem äußeren Ring vorgesehen sind.

In einer Ausführungsform ragt jedes Messer schräg, das heißt unter einem Anstellwinkel von 10° bis 90°, vorzugsweise deutlich weniger als 90°, beispielsweise 20° bis 70°, insbesondere 40° bis 60°, von der ersten Stirnseite ab. In einer Ausführungsform überlappt jedes der Messer mindestens ein benachbartes Messer.

In einer Ausführungsform sind die Messer zusammen mit dem Grundkörper mittels additiver Fertigung, insbesondere selektivem Laserschmelzen, hergestellt.

In einer Ausführungsform weisen die Messer jeweils eine Klingenstärke von 0,1 mm bis 5 mm, insbesondere 0,3 mm bis 2 mm, auf.

In einer Ausführungsform ist an jedem Messer eine Messerrippe zur Erhöhung der Steifigkeit des Messers vorgesehen.

Gemäß einem Aspekt der vorliegenden Erfindung wird eine Anordnung vorgeschlagen, umfassend einen Messerkopf wie oben beschrieben, der auf einer Antriebswelle angeordnet ist, die als eine Hohlwelle zum Zuführen von Prozesswasser zum Messerkopf ausgeführt ist.

In einer Ausführungsform ist ein starres Leitungsrohr in der Antriebswelle vorgesehen, das nicht mit der Antriebswelle mitrotiert und insbesondere an einem Ende mit einer Gleitlagerbuchse gelagert ist.

Gemäß einem Aspekt der vorliegenden Erfindung wird eine Vorrichtung zur Unterwassergranulierung angegeben, umfassend einen Messerkopf wie oben beschrieben oder eine Anordnung wie oben beschrieben, sowie eine Lochplatte als Reibpartner des Messerkopfes, wobei die Lochplatte wesentlich härter ausgelegt ist als die Messer und Düsen aufweist, die jeweils dazu konfiguriert sind, einen oder mehrere Stränge eines thermoplastischen Kunststoffs aus der Lochplatte austreten zu lassen.

In einer Ausführungsform sind die Messer so ausgeführt, dass eine Schneidkante jedes Messers unabhängig von dessen Verschleißzustand die gleiche Position gegenüber den Kanten der Düsen beibehält.

In einer Ausführungsform ist in der Lochplatte ein Wasserkanal zum Zuführen von Prozesswasser zum Messerkopf angeordnet.

Ausführungsbeispiele der Erfindung werden im Folgenden anhand von Zeichnungen näher erläutert.

Darin zeigen:

Figur 1      eine schematische perspektivische Ansicht eines Messerkopfes, insbesondere für eine Vorrichtung zur Unterwassergranulierung,

Figur 2      eine schematische Draufsicht des Messerkopfes,

Figur 3      eine schematische Detailansicht des Messerkopfes,

Figur 4      eine weitere schematische Detailansicht des Messerkopfes,

Figur 5      eine schematische Ansicht des Messerkopfes und einer Antriebswelle, auf der der Messerkopf angeordnet ist,

Figur 6      ein schematisches Diagramm zur Darstellung von Positionen von Kanten der Messer des Messerkopfes zu Kanten von Düsen einer Lochplatte in Abhängigkeit vom Abrieb der Messer,

Figur 7      eine schematische Abbildung eines Grundkörpers des Messerkopfes zur Veranschaulichung der Konstruktion der Messer,

Figur 8      eine schematische Ansicht des Messerkopfes mit einem Messer zur Veranschaulichung der Konstruktion der Messer,

Figur 9      eine schematische Ansicht des Messers zur Veranschaulichung eines Anstellwinkels,

Figur 10     eine schematische Darstellung des Messers zur Veranschaulichung von Hilfswinkeln,

Figur 11     eine schematische Darstellung des Messers zur Veranschaulichung von Hilfswinkeln,

Figur 12     eine schematische Darstellung des Messers zur Veranschaulichung von Hilfswinkeln, und

Figur 13     eine schematische Ansicht eines Extrusionswerkzeugs mit einer Lochplatte, durch die eine Wasserführung für Prozesswasser erfolgt.

Einander entsprechende Teile sind in allen Figuren mit den gleichen Bezugszeichen versehen.

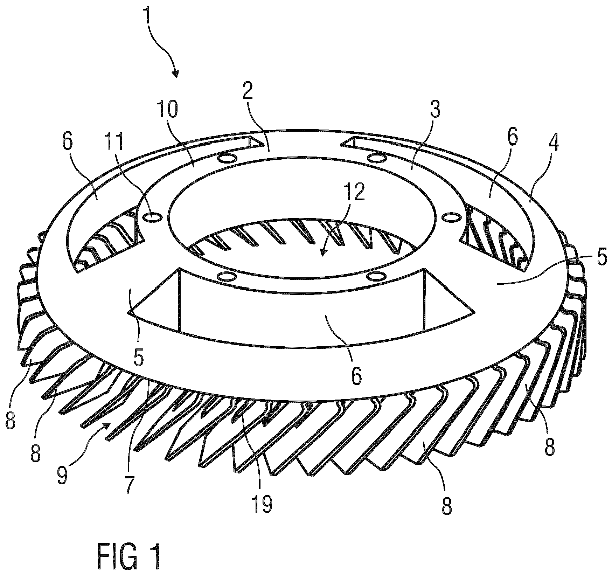

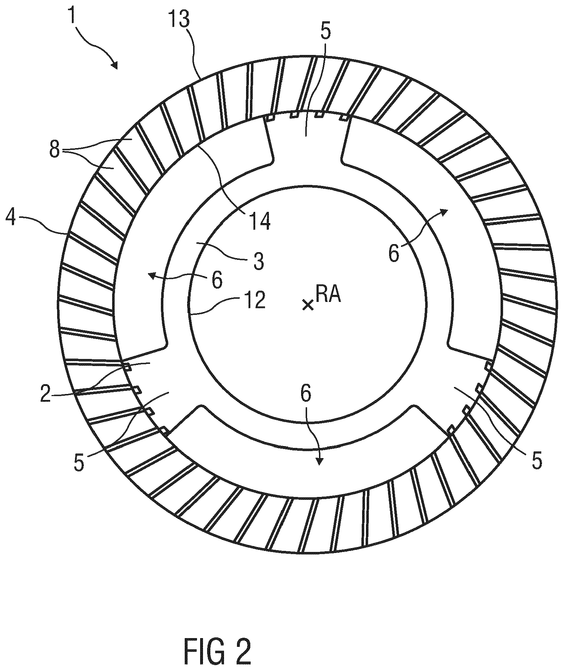

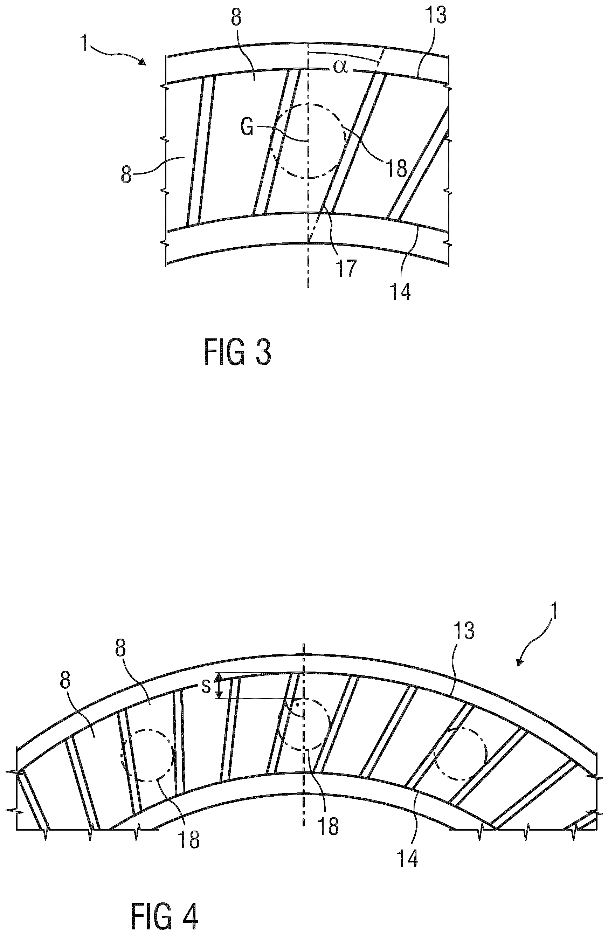

**Figur 1** ist eine schematische perspektivische Ansicht eines Messerkopfes 1, insbesondere für eine Vorrichtung zur Unterwassergranulierung. **Figur 2** ist eine schematische Draufsicht des Messerkopfes 1. **Figuren 3 und 4** zeigen schematische Detailansichten des Messerkopfes 1.

Der Messerkopf 1 weist einen tellerartigen Grundkörper 2 auf, der zur Montage an einer Antriebswelle 15 konfiguriert ist. Der Grundkörper 2 kann einen inneren Ring 3 und einen äußeren Ring 4 aufweisen, die über eine Anzahl von stegartigen Speichen 5 miteinander verbunden sind, so dass sich in Umfangsrichtung zwischen den Speichen 5 Aussparungen 6 ergeben. Auf einer ersten Stirnseite 7 des Grundkörpers 2, beispielsweise auf dem äußeren Ring 4, ist eine Vielzahl von Messern 8 kreisartig aufeinanderfolgend angeordnet, wobei jedes Messer 8 schräg, das heißt unter einem Winkel von 10° bis 90°, vorzugsweise deutlich weniger als 90°, beispielsweise 20° bis 70°, insbesondere 40° bis 60°, von der ersten Stirnseite 7 des Grundkörpers 2 abragt, wobei zwischen einander benachbarten Messern 8 jeweils ein Zwischenraum 9 vorgesehen ist. Dabei kann vorgesehen sein, dass jedes der Messer 8 mindestens ein benachbartes Messer 8 überlappt.

Im Grundkörper 2 kann auf einer zweiten Stirnseite 10, die der ersten Stirnseite 7 gegenüberliegt, insbesondere im inneren Ring 3, eine Anzahl von Montagebohrungen 11 zur Montage mit einer Antriebswelle 15 vorgesehen sein.

Im Inneren des Grundkörpers 2, beispielsweise im Inneren des inneren Ringes 3, befindet sich eine Aufnahmeöffnung 12 für die Antriebswelle 15. Die Aufnahmeöffnung 12 kann beispielsweise einen kreisförmigen Querschnitt aufweisen.

Anders als im Stand der Technik sind die Messer 8 nicht als im Wesentlichen gerade und/oder quaderförmige Messer, sondern als frei geformte Messer 8 ausgebildet, die für jeden Abnutzungszustand den gleichen Schnitt aufweisen.

Die Befestigung der Messer 8 erfolgt anders als im Stand der Technik nicht über seitliche Klemmbacken oder Schraubverbindungen und benötigt daher weniger Raum. Durch diese Verringerung des Raumbedarfs steht mehr Raum für den Wasserfluss und Abtransport von Schneidgut zur Verfügung. Die neuartigen Messer 8 werden mittels additiver Fertigung hergestellt und direkt zusammen mit dem Grundkörper 2 gefertigt. Dadurch sind keine lösbaren Verbindungen zwischen Messern 8 und weiteren Komponenten des Grundkörpers 2 nötig, sodass mehr Raum für Wasserfluss und Schneidgutabtransport zur Verfügung steht.

Die Aussparungen 6 können den Wasserfluss und den Abtransport von Schneidgut begünstigen.

In Figur 2 sind eine Außenkante 13 und eine Innenkante 14 der frei geformten Messer 8 dargestellt. Die Außenkante 13 ist aus Sicht einer Rotationsachse RA des Messerkopfes 1 der radial am weitesten von der Rotationsachse RA entfernte Teil der in Schneidrichtung (aus Sicht des Betrachters linksdrehend) vom liegenden Schneidkante 17 (in Figur 3 gezeigt) jedes Messers 8. Die Innenkante 14 ist analog der Teil der in Schneidrichtung (aus Sicht des Betrachters linksdrehend) vorn liegenden Schneidkante 17 jedes Messers 8, der radial den geringsten Abstand zur Rotationsachse RA aufweist.

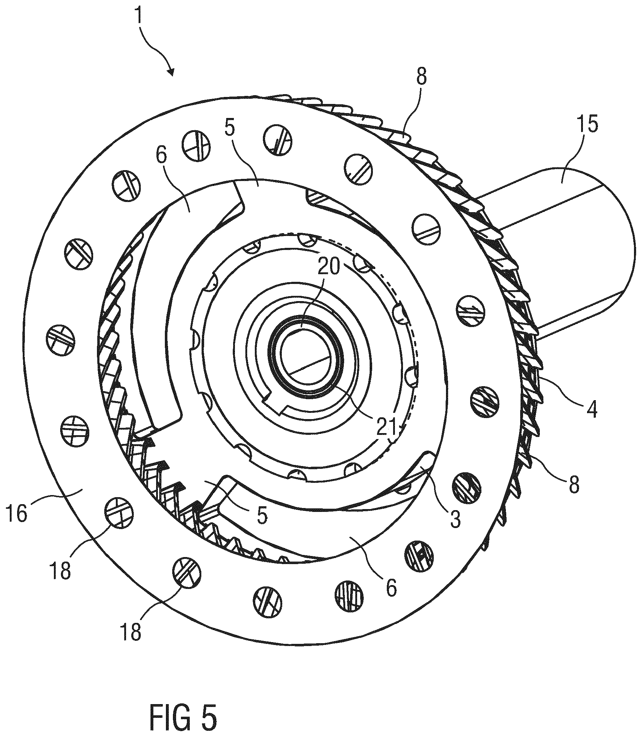

**Figur 5** ist eine schematische Ansicht des Messerkopfes 1 und einer Antriebswelle 15, auf der der Messerkopf 1 angeordnet ist.

In Figur 5 ist eine Schnittebene 16 dargestellt, die sich in einem Granulierprozess auf einer sogenannten Lochplatte, aus der die Kunststoffstränge austreten, und unter den Schneidekanten 17 der Messer 8, die auf die Lochplatte gedrückt werden, befindet. In dieser Darstellung ist vereinfachend ein Kreisloch für eine Düse 18 dargestellt, aus der ein oder mehrere Stränge (dann häufig auch als Multi-Hole-Düse bezeichnet) austreten können. Der Abstand zwischen den Messern 8 und der Schnittebene 16 ist in dieser Darstellung nur zur besseren Übersicht eingestellt. Im Granulierprozess stehen die Messer 8 typischerweise im direkten Kontakt mit der Lochplatte, so dass diese gemeinsam die Schneidebene oder Schnittebene 16 bilden.

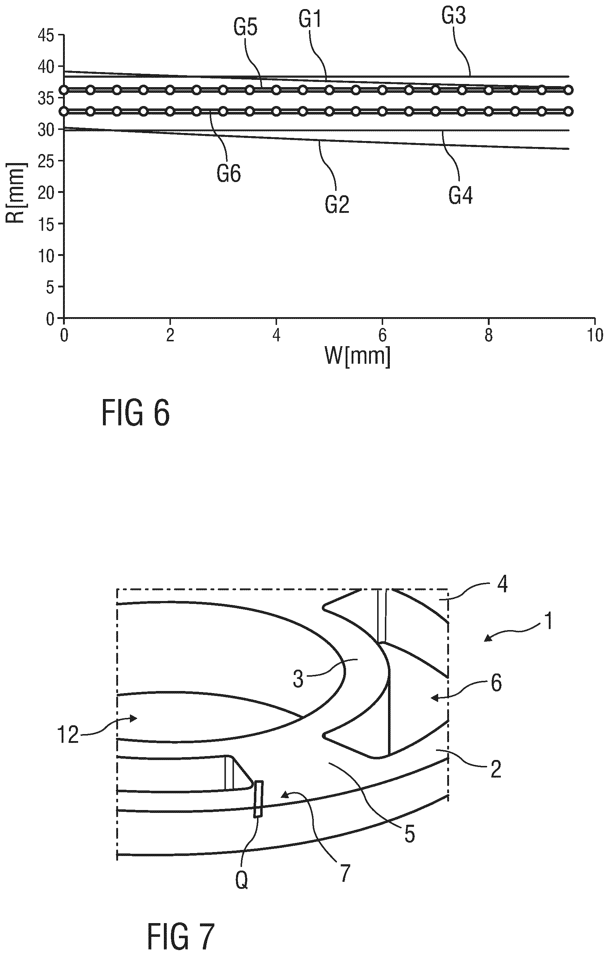

Die als Verschleißteile ausgelegten Messer 8 werden im Granulierprozess stetig kürzer und schärfen sich dabei selbst, da die Lochplatte, als ihr Reibpartner, wesentlich härter ausgelegt ist als die Messer 8. Dieser Verschleiß der Messer 8 bedeutet, dass sich der Grundkörper 2 der Schnittebene 16 immer weiter annähert. **Figur 6** ist ein schematisches Diagramm zur Darstellung der Positionen (ausgedrückt als Wert des Radius R ausgehend von der Rotationsachse RA) der Außenkante 13, der Innenkante 14 und der Kanten der Düsen 18 in Abhängigkeit vom Abrieb W der Messer 8.

Es ist erkennbar, wie sich die Positionen der Kanten in Abhängigkeit vom Abrieb W der Messer 8 für gegebene Beispiel-Messerköpfe verändern. Abrieb W bedeutet eine Verkürzung der Messer 8, so dass der Grundkörper 2 um die entsprechende Strecke näher an die Schnittebene 16 rückt. Die Darstellung erhebt keinen Anspruch auf die Wiedergabe exakter Maße, sondern soll die qualitative Veränderung verdeutlichen.

Der Graph G1 repräsentiert die Außenkante und der Graph G2 die Innenkante eines geraden Messers gemäß dem Stand der Technik. Der Graph G3 repräsentiert die Außenkante 13 und der Graph G4 die Innenkante 14 eines Messers 8 gemäß der vorliegenden Erfindung. Der Graph G5 repräsentiert die Außenkante und der Graph G6 die Innenkante der Düsen 18. Es wird deutlich, dass die Kanten der geraden Messer gemäß dem Stand der Technik mit zunehmendem Abrieb W immer weiter verschoben werden. Diese Verschiebung verschwindet nur dann, wenn die Messer senkrecht zur Lochplatte stehen.

Typischerweise wird eine andere Anstellung der Messer benötigt, um einen zufriedenstellenden Schnitt und Schneidgutabtransport sicherzustellen. Sobald also ein anderer Anstellwinkel als der beschriebene senkrechte Winkel gewählt wird, kommt es zu einer Verschiebung der Messerkanten mit zunehmendem Abrieb W. Das Messer 8 muss die Kanten der Düsen 18 vollständig überstreichen, wenn der Kunststoffstrang komplett oder wenn alle Kunststoffstränge geschnitten werden sollen, was immer Ziel der Unterwassergranulierung ist. Es wird deutlich, dass bei geraden Messern mit zunehmendem Abrieb W oder Verschleiß der Fall eintreten kann, dass dieser Bereich verlassen wird.

Die frei geformten Messer 8 sind genauso ausgeführt, dass die Schneidkante 17 unabhängig vom Verschleißzustand die gleiche Position gegenüber den Kanten der Düsen 18 aufweist. Dies hat große Vorteile hinsichtlich der Größe der Messer 8.

Es wird deutlich, dass bei geraden Messern gemäß dem Stand der Technik die Messer so breit gewählt werden müssen, dass sie beim voraussichtlichen Verschleiß die Kanten der Düsen 18 immer abdecken. Je breiter die Messer, desto weniger Raum bleibt für den Wasserfluss und den Schneidgutabtransport. Zudem ist die Messerbreite in beide Richtungen limitiert. Nach außen hin begrenzen die Abmessungen einer Schneidkammer die mögliche Messerbreite und nach innen können die Messer schließlich aneinanderstoßen. Je mehr Messer an einem Messerhalter oder Grundkörper platziert werden, desto eher können besonders breite Messer miteinander in räumlichen Konflikt treten.

Die frei geformten Messer 8 gemäß der vorliegenden Erfindung können also prinzipiell länger ausgeführt werden als die im Stand der Technik bekannten geraden Messer, weil für sie die Limitationen hinsichtlich der Messerbreite gerader Messer nicht gelten. Längere Messer 8 sind gleichbedeutend mit einer längeren Standzeit und geringeren Rüstzeiten. Prinzipbedingt muss bei frei geformten Messern 8 also die Messerbreite nicht zunehmen, um den verschleißbedingten Versatz der Schneidkante 17 zu kompensieren.

Die mögliche Anzahl der Messer 8 an einem Messerkopf 1 mit frei geformten Messern 8 ist im Wesentlichen dadurch limitiert, wie massiv jedes Messer 8 mindestens ausgeführt sein muss, um den Belastungen im Schneidprozess standzuhalten und wie viel Platz zwischen den Messern 8 für den Wasserfluss und Schneidguttransport vorgesehen werden soll. Bei den im Stand der Technik bekannten geraden Messern ist die Messerbreite und der damit zusammenhängende mögliche räumliche Konflikt ein zusätzlicher limitierender Faktor der Messeranzahl. Eine besonders hohe Messeranzahl ist insbesondere bei der Herstellung von sogenanntem Mikrogranulat von Bedeutung. Mikrogranulat bedeutet in diesem Zusammenhang eine Korngröße von unter einem 1 mm. Grundsätzlich steigt mit der Messeranzahl bei gleichbleibender Drehzahl des Messerkopfes 1 die Anzahl der Schneidvorgänge an einer Düse 18 je Zeiteinheit (auch als Schnittfrequenz bezeichnet). Eine Steigerung der Schnittfrequenz kann dazu genutzt werden, kürzere Körner herzustellen oder einen höheren Durchsatz Kunststoffschmelze bei gleicher Korngröße zu erreichen.

Weitere Auswirkungen der Messerform auf den Schneidvorgang werden mit Hilfe des Schnittwinkels $\alpha$ und des Messerüberstandes s in Figur 3 und 4 verdeutlicht. Der Schnittwinkel $\alpha$ ist definiert als Winkel zwischen der Schneidkante 17 des Messers 8, wenn diese die Kante der Düse 18 berührt, und der Geraden G, die durch die Rotationsachse RA des Messerkopfes 1 und den Mittelpunkt der betrachteten Düse 18 in der Schnittebene 16 gebildet werden kann. Damit ist der Schnittwinkel $\alpha$ ein Maß dafür, wie die Schneidkante 17 über die Düse 18 streicht, und damit in welchem Winkel das Schneidgut abgeschnitten wird. Aus Tabelle 1 geht hervor, wie sich der Schnittwinkel $\alpha$ in Abhängigkeit vom Abrieb W der Messer 8 für gerade Messer gemäß dem Stand der Technik und für frei geformte Messer 8 verhält. Für gerade Messer verändert sich der Schnittwinkel $\alpha$ mit dem Abrieb W, für frei geformte Messer 8 nicht. Damit können frei geformte Messer 8 einen wesentlich besser reproduzierbaren Schneidvorgang sicherstellen.

*Tabelle 1: Schnittwinkel und Messerüberstand*

| Abrieb W [mm] | Gerade Messer | | Frei geformte Messer 8 | |
|---|---|---|---|---|
| | Messerüberstand s [mm] | Schnittwinkel $\alpha$ [°] | Messerüberstand s [mm] | Schnittwinkel $\alpha$ [°] |
| 0 | 2,953 | 31,17 | 2,122 | 21,38 |
| 3 | 1,964 | 25,93 | 2,122 | 21,38 |
| 6 | 1,149 | 20,93 | 2,122 | 21,38 |
| 9 | 0,517 | 16,09 | 2,122 | 21,38 |

Die frei geformten Messer 8 verfügen im Gegensatz zu den im Stand der Technik bekannten geraden Messern über eine gewundene Form, welche den konstanten Messerüberstand s und Schnittwinkel $\alpha$ sicherstellen. Sie stellen demnach sicher, dass ein reproduzierbarer Schnitt zu jeder Zeit und nach sämtlichen abrasiven Effekten erfolgt. Bei der Konstruktion der Messer 8 wird beispielsweise zuerst ein Querschnitt Q der neuen Messer 8 auf dem Grundkörper 2 skizziert. Dies ist schematisch in **Figur 7** dargestellt. Anschließend kann das Messer 8 mit dem gewünschten Querschnitt Q über den Befehl "Spirale" erstellt werden. In diesem Schritt bestimmt man die entsprechenden Spiralparameter (Steigung, Umdrehung und Verjüngung), die das Messer 8 später aufweisen soll. Die schraubenähnliche Messerform bezieht sich, wie auch der gesamte rotationssymmetrische Messerkopf 1, auf die Rotationsachse RA der Antriebswelle 15.

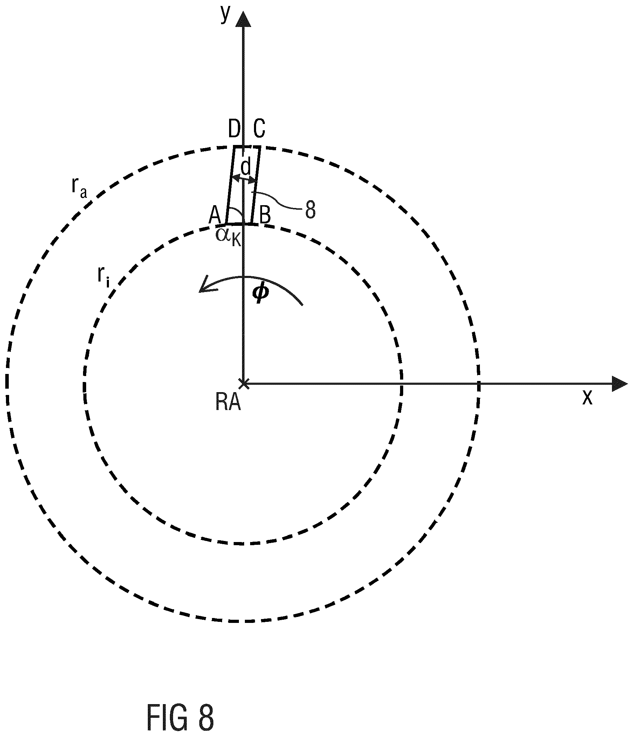

**Figur 8** ist eine schematische Ansicht des Messerkopfes 1 mit einem Messer 8 zur Veranschaulichung der Konstruktion der Messer 8. In einem kartesischen Koordinatensystem bildet die Rotationsachse RA des Messerkopfes 1 die z-Achse. Der Messerkopf 1 rotiert aus der gezeigten Perspektive linksdrehend. Eine x-y-Ebene entsprechend einer orthogonalen Ebene zur Rotationsachse RA wird durch die x-Achse x und die y-Achse y aufgespannt. Eine Querschnittsfläche eines Messers 8 wird gebildet von einem Viereck ABCD mit den Eckpunkten A, B, C, D. Bei einem Messerwinkel $\alpha_K$ von 90° ist dieses Viereck ABCD ein Rechteck. Die Punkte A und B liegen auf einem Kreis mit dem Radius $r_i$ um die Rotationsachse RA, und die Punkte C und D liegen auf einem Kreis mit dem Radius $r_a$ um die Rotationsachse RA. Die Linien AD und CB sind parallel zueinander und haben den Abstand d.

Wenn dieses Viereck ABCD gewunden in Z-Richtung, also parallel zur Rotationsachse RA, extrudiert wird, so wird der Körper eines Messers 8 gebildet. Mit Hilfe von Schraublinien werden die dreidimensionalen Koordinaten der entsprechenden vier Kanten des Körpers des Messers 8 im Folgenden beschrieben. (Grundsätzlich ist auch denkbar, dass die Eckpunkte A, B, C, D nicht durch gerade Linien verbunden sind, sondern durch frei geformte Profile.)

Im Folgenden wird die Schraublinie für die Kante, die Punkt A enthält, beschrieben. Diese Kante wird im Folgenden als Vektor $\vec{A}$ bezeichnet.

$$\vec{A}(\phi) = \begin{pmatrix} r_i \cdot \cos(\phi) \\ r_i \cdot \sin(\phi) \\ \dfrac{\phi \cdot h}{360°} + c \end{pmatrix}$$

Dabei ist $\phi$ der Schraubwinkel oder Schraubparameter, h ist die Höhe in z-Richtung, bei der die Schraublinie eine volle Windung beschreibt, c ist eine Verschiebung der Schraublinie in z-Richtung, die auch zu 0 gewählt werden kann.

In Anlehnung an gerade Messer kann die Beziehung der Höhe h zu einem Anstellwinkel $\alpha_A$ des Messers 8 angegeben werden durch:

$$h = 2\pi r_i \tan(\alpha_A)$$

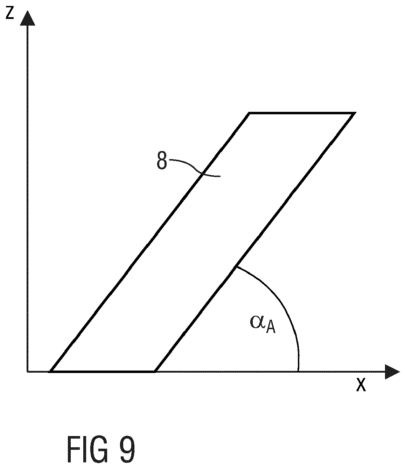

**Figur 9** ist eine schematische Ansicht des Messers 8 zur Veranschaulichung des Anstellwinkels $\alpha_A$.

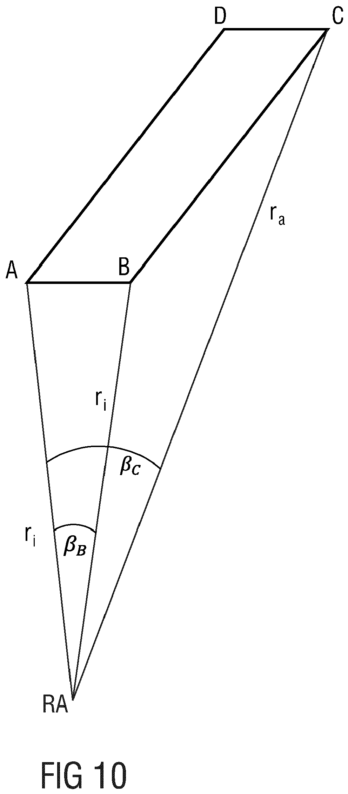

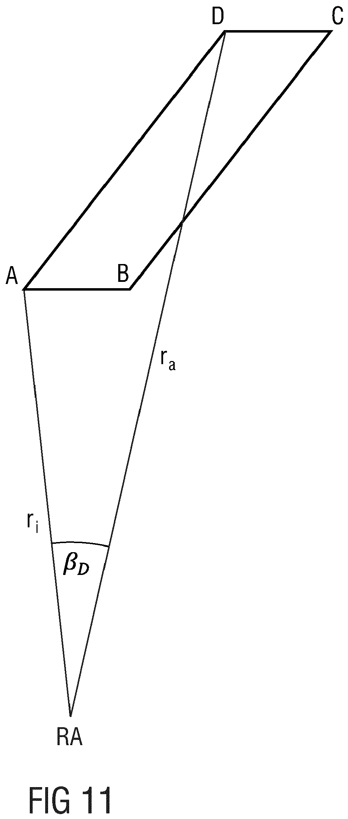

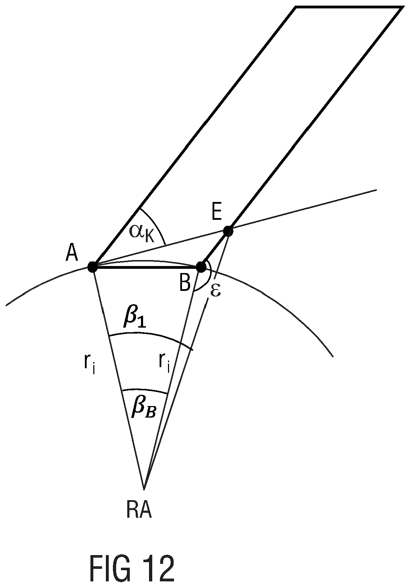

Nachfolgend wird eine Reihe von Hilfswinkeln eingeführt, um die weiteren Kanten des Messers 8 zu beschreiben. **Figuren 10 bis 12** zeigen schematische Darstellungen des Messers 8 zur Veranschaulichung dieser Hilfswinkel.

$$\beta_C = 90° - \alpha_K - \arcsin\left(\frac{\sin(\epsilon)\, r_i}{r_a}\right)$$

$$\beta_D = 90° - \alpha_K - \arcsin\left(\frac{\sin(90° + \alpha_K)\, r_i}{r_a}\right)$$

$$\beta_1 = \arctan\left(\frac{d}{\sin(\alpha_K)\, r_i}\right)$$

$$\beta_B = 90° - \alpha_K - \arcsin\left(\frac{\sin(90° - \alpha_K - \beta_1)}{\cos(\beta_1)}\right)$$

$$\epsilon = 180° - \arcsin\left(\frac{\sin(90° - \alpha_K - \beta_1)}{\cos(\beta_1)}\right)$$

Der Hilfswinkel $\beta_C$ ist der Winkel zwischen zwei Linien, die durch Verbinden des Kreismittelpunkts in der Rotationsachse RA mit dem Punkt A einerseits und dem Punkt C andererseits entstehen. Der Hilfswinkel $\beta_D$ ist der Winkel zwischen zwei Linien, die durch Verbinden des Kreismittelpunkts in der Rotationsachse RA mit dem Punkt A einerseits und dem Punkt D andererseits entstehen. Der Hilfswinkel $\beta_1$ ist der Winkel zwischen zwei Linien, die durch Verbinden des Kreismittelpunktes in der Rotationsachse RA mit dem Punkt A einerseits und dem Punkt E andererseits entstehen. Den Punkt E erhält man als Schnittpunkt der Geraden BC und der Tangente am Kreis mit Radius $r_i$ im Punkt A. Der Hilfswinkel $\beta_B$ ist der Winkel zwischen zwei Linien, die durch Verbinden des Kreismittelpunkts in der Rotationsachse RA mit dem Punkt A einerseits und dem Punkt B andererseits entstehen. Der Hilfswinkel $\varepsilon$ ist der Innenwinkel am Punkt B des Dreiecks, das aus den Punkten B, E und dem Kreismittelpunkt der Rotationsachse RA gebildet wird.

Analog zur Kante $\vec{A}$ werden mit Hilfe der Hilfswinkel $\beta_B$, $\beta_C$, $\beta_D$, $\beta_1$, $\varepsilon$ die anderen Kanten als Schraublinie angegeben. Für gleiche Werte des Schraubwinkels $\phi$ ergeben sich aus diesen vier Gleichungen stets vier Punkte A, B, C, D in einer Ebene parallel zur x-y-Ebene, die dann die Vierecks-Querschnitts-Kontur eines Messers 8 angeben.

$$\vec{B}(\phi) = \begin{pmatrix} r_i \cdot \cos(\phi - \beta_B) \\ r_i \cdot \sin(\phi - \beta_B) \\ \dfrac{\phi \cdot h}{360°} + c \end{pmatrix}$$

$$\vec{C}(\phi) = \begin{pmatrix} r_a \cdot \cos(\phi - \beta_C) \\ r_a \cdot \sin(\phi - \beta_C) \\ \dfrac{\phi \cdot h}{360°} + c \end{pmatrix}$$

$$\vec{D}(\phi) = \begin{pmatrix} r_a \cdot \cos(\phi - \beta_D) \\ r_a \cdot \sin(\phi - \beta_D) \\ \dfrac{\phi \cdot h}{360°} + c \end{pmatrix}$$

Für den Anstellwinkel $\alpha_A$ und die damit assoziierte Höhe in der Schraublinie kann ein Wert von 10° bis 90°, vorzugsweise deutlich weniger als 90°, beispielsweise 20° bis 70°, insbesondere 40° bis 60°, gewählt werden.

Das Messer 8 kann beispielsweise eine Messerstärke d von 0,1 mm bis 5 mm, insbesondere von 0,3 mm bis 2 mm aufweisen.

Der Messerwinkel $\alpha_K$ kann beispielsweise im Bereich von 10° bis 170°, vorzugsweise unter 90° liegen, da dann das Schneidgut effektiv nach außen abgeführt wird. Insbesondere liegt der Messerwinkel $\alpha_K$ im Bereich von 20° bis 90°, bevorzugt im Bereich von 45° bis 80°. Dies gilt insbesondere für den Fall, dass der Messerkopf 1 - in der Perspektive von Fig. 8 - linksdrehend angetrieben wird. Bei rechtsdrehendem Betrieb ist ein Winkel $\alpha_K$ im Bereich 90° bis 160° günstig, bevorzugt 110° bis 145°.

Typischerweise ist es ein Ziel der Nutzung dieser Messerform, dass die Messeranzahl gesteigert wird. Um dies umzusetzen, bedarf es konstruktiver Anpassungen. So wird in diesem Beispiel die Klingenstärke von 2 mm auf 0,7 mm reduziert, was wiederum eine höhere Biegespannung auf die Messer 8 mit sich bringt. Um diese weitestgehend zu kompensieren, wurde an jedem Messer 8 eine Messerrippe 19 vorgesehen, die die Steifigkeit des Messers 8 erhöht. Es hat sich in einer FEM-Analyse (statisches Aufbringen einer Kraft auf die Schnittflächen aller Messer 8, Grundkörper 2 an der Antriebswelle 15 eingespannt) gezeigt, dass entstehende Spannungsspitzen nicht in den Messern 8, sondern in den Messerrippen 19 liegen und die Messerrippen 19 somit ihre Aufgabe erfüllen. Grundsätzlich sind zahlreiche Möglichkeiten denkbar, versteifende Rippen 19 einzubringen, beispielsweise an der Innen- und/oder Außenkante der Messer 8, die dann über die komplette Länge der Messer 8 vorgesehen werden können. Das Messer 8 kann dann so breit gewählt werden, dass die Rippen 19 in einem Bereich liegen, in dem kein Schneidvorgang stattfindet, so dass der Einfluss der Rippen 19 auf den Schneidvorgang minimiert wird.

Zum einen sind die Abstände zwischen benachbarten Messern 8 (beispielsweise 48 Stück) wesentlich geringer als zuvor und lassen eine Montage mittels Klemmbacken wie im Stand der Technik, die über den Umfang einen sehr hohen Platzbedarf aufweisen, kaum mehr zu. Zum anderen macht die komplexe Geometrie der Messer 8 mit den Messerrippen 19 eine konventionelle spanende Fertigung kaum umsetzbar. Additive Fertigungsverfahren, wie Selektives Laserschmelzen, können komplexe Strukturen und Freiformen realisieren.

Somit ist eine additive Fertigung der frei geformten Messer 8 oder des kompletten Messerkopfes 1 aus hinreichend harten bzw. härtbaren Werkzeugstählen möglich. Typischerweise werden Härten für die Messer von HRC 60 und mehr angestrebt. Mit entsprechender Nachbehandlung (thermische Behandlung, Nitrieren etc.) können diese Werte erreicht werden.

Typischerweise ist die Wasserführung bei Unterwassergranulieranlagen derart, dass Wasser durch die Aussparungen 6 des Messerkopfes 1 von und zu den Messern 8 sowie von der Außenseite von und zu den Messern 8 fließen kann. Es umströmt dann die Messer 8 um das Schneidgut zu kühlen und es abzutransportieren. Durch die Drehbewegung des gesamten Messerkopfes 1 kann es vorkommen, dass das Wasser nach außen (innen ist die Rotationsachse RA) verdrängt wird. Dieser Effekt kann so stark sein, dass eine Luftblase um die Rotationsachse RA des Messerkopfes 1 im Raum zwischen Schnittebene 16 und Grundkörper 2 entsteht. Im ungünstigsten Fall werden die Messer 8 nicht mehr vollständig vom Wasser umspült, wodurch dann der Schneidguttransport so stark verschlechtert werden kann, dass die Zwischenräume 9 mit Schneidgut zugesetzt werden, was typischerweise zu Qualitätseinbußen und/oder einem unerwünschten Abbruch des Granuliervorgangs führt.

Diesem Problemfall wird typischerweise dadurch entgegengewirkt, dass der Druck, mit dem das Wasser durch diesen Bereich gepumpt wird, erhöht wird.

Da mit den erfindungsgemäß frei geformten Messern 8 die Messeranzahl erhöht werden kann, kann dabei auch die Wasserführung erschwert werden. Bei höherer Messeranzahl steht weniger freies Volumen für das Wasser zur Verfügung. Zusätzlich verstärken die weiteren Messer 8 den Effekt, dass das Wasser nach außen verdrängt wird. Es könnte zwar der Druck, mit dem das Prozesswasser durch diesen Bereich gepumpt wird, weiter erhöht werden, aber eine wesentliche Problemursache wird nicht gelöst, nämlich dass das Wasser vom Außenbereich in die Zwischenräume 9 eindringen und gleichzeitig auch in den Außenbereich abtransportiert werden soll. Daher wird in einer beispielhaften Ausführungsform eine andersartige Wasserführung vorgestellt.

Diese Ausführungsform sieht vor, dass die Antriebswelle 15 als eine Hohlwelle ausgeführt ist. Durch diese Hohlwelle kann das Prozesswasser gepumpt werden, und tritt somit in genau dem Bereich aus, der bei konventioneller Wasserführung am schlechtesten erreicht wird. Es wird damit auch eine Strömung forciert, die von der Rotationsachse RA aus nach außen gerichtet ist. Damit wird das Schneidgut auch eher in die gewünschte Richtung abtransportiert.

Es kann zusätzlich ein starres Leitungsrohr 20 in der Antriebswelle 15 vorgesehen sein, das nicht mit der Antriebswelle 15 mitrotiert und am Ende beispielsweise mit einer Gleitlagerbuchse 21 gelagert ist. Damit wird dem Prozesswasser kein Drehimpuls in diesem Bereich aufgeprägt wie es der Fall ist, wenn das Wasser direkt in der Hohlwelle fließt. Somit kann eine Strudelbildung, die zu einer Luftblase im Bereich der Rotationsachse RA nahe der Schnittebene 16 führen kann, weiter reduziert werden.

Bei dieser Wasserführung kann auch auf die Aussparungen 6 im Grundkörper 2 verzichtet werden. Dadurch muss das Wasser durch die Zwischenräume 9 zwischen den Messern 8 strömen.

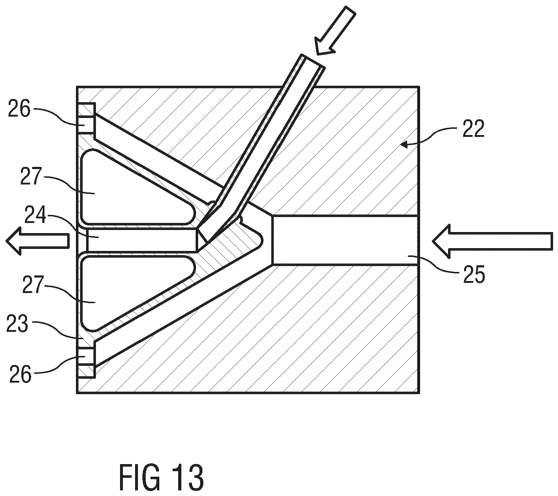

In einer weiteren Ausführungsform kann vorgesehen sein, die Wasserzuführung durch die Lochplatte 23 hindurch zu gestalten. **Figur 13** ist eine schematische Ansicht eines Extrusionswerkzeugs 22 mit einer Lochplatte 23, durch die die Wasserführung erfolgt. Das Extrusionswerkzeug 22 weist einen Schmelzezulauf 25 für die Zuleitung von Kunststoffschmelze auf. Der Schmelzezulauf 25 verzweigt sich in mehrere Schmelzekanäle, die in Austrittsöffnungen 26 in der Lochplatte 23 münden. Die Wasserzuführung zum Schneidprozess kann etwa mittig in der Lochplatte 23 durch einen Wasserkanal 24 vorgesehen sein.

Eine derartige Wasserzuführung im Extrusionswerkzeug 22 kann beispielsweise mit den Möglichkeiten der additiven Fertigung realisiert werden. Ebenso wie bei der oben beschriebenen Wasserführung in der Hohlwelle soll Wasser die Zwischenräume 9 der Messer 8 überwiegend nur in eine Richtung durchströmen, daher wird das Wasser in der Mitte des Messerkopfes 1 zugeführt, im Beispiel gemäß Figur 13 von der Seite des Extrusionswerkzeugs 22 aus. Eine Herausforderung besteht darin, dass das Extrusionswerkzeug 22 die Kunststoffschmelze führt und die Stellen des Extrusionswerkzeugs 22, die in unmittelbarer Berührung mit der Kunststoffschmelze stehen, eine hinreichend hohe Temperatur aufweisen müssen, damit die Kunststoffschmelze nicht vorzeitig erstarrt, während das Wasser eine Temperatur aufweist, die unterhalb der Erstarrungstemperatur der Kunststoffschmelze liegt. Damit das Extrusionswerkzeug 22 durch das hindurchgeleitete Wasser nicht zu stark abkühlt, kann dieser Bereich isoliert werden. Dies kann beispielsweise durch Hohlkammern 27 erfolgen, die den Wasserkanal 24 umgeben und/oder daran angrenzen.

## BEZUGSZEICHENLISTE

| | |
|---|---|
| 1 | Messerkopf |
| 2 | Grundkörper |
| 3 | innerer Ring |
| 4 | äußerer Ring |
| 5 | Speiche |
| 6 | Aussparung |
| 7 | erste Stirnseite |
| 8 | Messer |
| 9 | Zwischenraum |
| 10 | zweite Stirnseite |
| 11 | Montagebohrung |
| 12 | Aufnahmeöffnung |
| 13 | Außenkante |
| 14 | Innenkante |
| 15 | Antriebswelle |
| 16 | Schnittebene |
| 17 | Schneidkante |
| 18 | Düse |
| 19 | Messerrippe |
| 20 | Leitungsrohr |
| 21 | Gleitlagerbuchse |
| 22 | Extrusionswerkzeug |
| 23 | Lochplatte |

| 24 | Wasserkanal |
|---|---|
| 25 | Schmelzezulauf |
| 26 | Austrittsöffnung |
| 27 | Hohlkammer |
| A | Punkt, Eckpunkt |
| B | Punkt, Eckpunkt |
| C | Punkt, Eckpunkt |
| d | Abstand |
| D | Punkt, Eckpunkt |
| E | Punkt, Eckpunkt |
| ABCD | Viereck |
| G | Gerade |
| G1 bis G6 | Graph |
| Q | Querschnitt |
| R | Radius |
| $r_a$ | Radius |
| $r_i$ | Radius |
| RA | Rotationsachse |
| s | Messerüberstand |
| W | Abrieb |
| x | x-Achse |
| y | y-Achse |
| z | z-Achse |

| $\alpha$ | Schnittwinkel |
|---|---|
| $\alpha_A$ | Anstellwinkel |
| $\alpha_K$ | Messerwinkel |
| $\beta_B$ | Hilfswinkel |
| $\beta_C$ | Hilfswinkel |
| $\beta_D$ | Hilfswinkel |
| $\beta_1$ | Hilfswinkel |
| $\varepsilon$ | Hilfswinkel |
| $\phi$ | Schraubwinkel |

## Patentansprüche

1. Messerkopf (1), umfassend:

   - einen Grundkörper (2), der zur Montage an einer Antriebswelle (15) konfiguriert ist, und eine erste Stirnseite (7) aufweist,
   - eine Vielzahl von Messern (8), die auf der ersten Stirnseite (7) in einem Kreis aufeinanderfolgend angeordnet sind, wobei zwischen einander benachbarten Messern (8) jeweils ein Zwischenraum (9) vorgesehen ist, wobei die Messer (8) als frei geformte Messer (8) ausgebildet sind, die ausgehend von der Stirnseite (7) in sich spiralartig gewunden sind.

2. Messerkopf (1) nach Anspruch 1, wobei der Grundkörper (2) einen inneren Ring (3) und einen äußeren Ring (4) aufweist, die über eine Anzahl von stegartigen Speichen (5) miteinander verbunden sind, so dass sich in Umfangsrichtung zwischen den Speichen (5) Aussparungen (6) ergeben, oder wobei keine Aussparungen zwischen dem inneren Ring (3) und dem äußeren Ring (4) vorgesehen sind.

3. Messerkopf (1) nach Anspruch 1 oder 2, wobei jedes Messer (8) schräg, das heißt unter einem Anstellwinkel ($\alpha_A$) von 10° bis 90°, vorzugsweise deutlich weniger als 90°, beispielsweise 20° bis 70°, insbesondere 40° bis 60°, von der ersten Stirnseite (7) ab ragt.

4. Messerkopf (1) nach Anspruch 3, wobei jedes der Messer (8) mindestens ein benachbartes Messer (8) überlappt.

5. Messerkopf (1) nach einem der vorhergehenden Ansprüche, wobei die Messer (8) zusammen mit dem Grundkörper (2) mittels additiver Fertigung, insbesondere selektivem Laserschmelzen, hergestellt sind.

6. Messerkopf (1) nach einem der vorhergehenden Ansprüche, wobei die Messer (8) eine Klingenstärke von 1 mm bis 5 mm, insbesondere 0,3 mm bis 2 mm, aufweisen.

7. Messerkopf (1) nach einem der vorhergehenden Ansprüche, wobei an jedem Messer (8) eine Messerrippe (19) zur Erhöhung der Steifigkeit des Messers (8) vorgesehen ist.

8. Anordnung, umfassend einen Messerkopf (1) nach einem der vorhergehenden Ansprüche, der auf einer Antriebswelle (15) angeordnet ist, die als eine Hohlwelle zum Zuführen von Prozesswasser zum Messerkopf (1) ausgeführt ist.

9. Anordnung nach Anspruch 8, wobei ein starres Leitungsrohr (20) in der Antriebswelle (15) vorgesehen ist, das nicht mit der Antriebswelle (15) mitrotiert und insbesondere an einem Ende mit einer Gleitlagerbuchse (21) gelagert ist.

10. Vorrichtung zur Unterwassergranulierung, umfassend einen Messerkopf (1) nach einem der Ansprüche 1 bis 7 oder eine Anordnung nach Anspruch 8 oder 9, sowie eine Lochplatte (23) als Reibpartner des Messerkopfes (1), wobei die Lochplatte (23) wesentlich härter ausgelegt ist als die Messer (8) und Düsen (18) aufweist, die jeweils dazu konfiguriert sind, einen oder mehrere Stränge eines thermoplastischen Kunststoffs aus der Lochplatte (23) austreten zu lassen.

11. Vorrichtung nach Anspruch 10, wobei die Messer (8) so ausgeführt sind, dass eine Schneidkante (17) jedes Messers (8) unabhängig von dessen Verschleißzustand die gleiche Position gegenüber den Kanten der Düsen (18) beibehält.

12. Vorrichtung nach Anspruch 10 oder 11, wobei in der Lochplatte (23) ein Wasserkanal (24) zum Zuführen von Prozesswasser zum Messerkopf (1) angeordnet ist.

FIG 1

FIG 2

FIG 3

FIG 4

FIG 5

FIG 6

FIG 7

FIG 8

FIG 9

FIG 10

FIG 11

FIG 12

FIG 13